# EUROPÄISCHE PATENTANMELDUNG

(11) **EP 1 466 518 A2**
(43) Veröffentlichungstag der Anmeldung: **13.10.2004**
(21) Anmeldenummer: 04006159.0
(22) Anmeldetag: 16.03.2004
(51) Int. Cl.: A01D 45/02

(54) **Pflückvorsatz zum Ernten von Fruchständen**

(30) Priorität: 07.04.2003 DE 10316003
(71) Anmelder: CLAAS Saulgau GmbH, 88348 Bad Saulgau (DE)
(72) Erfinder: Rauch, Hans, 88348 Bad Saulgau (DE)

(57) **Zusammenfassung**

Pflückvorsatzgerät (1) zum Ernten von Fruchtständen für Mähdrescher (2) für Mähdrescher (2), wie beispielsweise Maiskolben, bestehend aus mehreren in einem Rahmengestell (3) nebeneinander angeordneten Pflückaggregaten (8), die mit umlaufend angetriebenen Werkzeugen (7) ausgestattet sind, die über Antriebsstränge mit der Motorwelle des Motors (9) eines Mähdreschers (2) antriebsseitig in Wirkverbindung stehen, wobei das Pflückvorsatzgerät (1) wenigstens vier Pflückergruppen (21,21',23,23') mit Pflückaggregaten (8) mit umlaufend angetriebenen Werkzeugen (7) aufweist, wobei wenigstens zwei Pflückergruppen (21,23) bzw. (21',23') etwa beidseits der Längsmittelebenen (12) angeordnet sind, und die wenigsten zwei Pflückergruppen (21,23) bzw. (21',23') über einen vorgelagerten Antriebsstrang (14 bzw. 14') derart angetrieben sind, dass jeder Pflückergruppe (21,23) bzw. (21'23') eine Antriebsverzweigung (15 oder 22) zugeordnet ist, die ihrerseits Teile des vorgelagerten Antriebsstrang (14,14') sind, und wobei die abgehenden Antriebsstränge (16) der Antriebsverzweigungen (15) antriebsseitig in einer weiteren Antriebsverzweigung (17) der jeweiligen Pflückergruppe (21,21',23,23') münden und mit dem einer Pflückergruppe (21,21',(23,23') zugeordneten Gruppenantriebsstrang (16) in Wirkverbindung stehen, und wobei eine Pflückergruppe (21,21',23,23') wenigstens zwei Pflückaggregate (8) umfasst.

## Beschreibung

Die Erfindung betrifft ein Pflückvorsatzgerät für Mähdrescher zum Ernten von Fruchtständen nach dem Oberbegriff des Anspruchs 1.

Derartige Pflückvorsatzgeräte für Mähdrescher sind auch unter dem Begriff Maispflücker bekannt. Unabhängig davon, ob derartige Maispflücker reihenabhängig oder reihenunabhängig arbeiten, weisen diese mehrere quer zur Fahrtrichtung nebeneinander angeordnete Pflückaggregate auf, die in einem diesen gemeinsamen Rahmen befestigt und gelagert sind.

Die Pflückaggregate arbeiten nach dem Prinzip des Abstreifens, d.h. die Stängel der Maispflanzen samt Blattwerk werden im Bereich der Pflückaggregate durch einen Pflückspalt hindurchgezogen, so dass dabei die Maiskolben von den Stängeln abgerissen und zurückgehalten werden. Es handelt sich hierbei also gleichzeitig um einen Separationsvorgang, bei dem die Maiskolben, nachdem sie von der restlichen Maispflanze abgetrennt wurden, dem Dreschaggregat zugeführt werden.

Der eigentliche Abstreifvorgang wird dabei von rotierenden Antriebelementen unterstützt, welche die Maisstängel erfassen und auf diese nach unten gerichtete Zugkräfte ausüben.

Außerdem wird die Maispflanze von Ihrer Wurzel abgetrennt. Dazu werden vorzugsweise rotierende Schneidwerkzeuge eingesetzt, die die Maispflanze kurz oberhalb des Bodens von Ihrer Stoppel abtrennen.

Da die restliche Pflanze im Regelfall nicht mitgeerntet wird, wird diese nach dem Separationsvorgang des Abtrennens der Maiskolben zerkleinert. Dieses kann beispielsweise von sogenannten Horizontalhäckslern, die unterhalb der Pflückaggregate angeordnet sind, durchgeführt werden.

Mit zunehmenden Arbeitsbreiten werden auch weitere Pflück- und Häckselaggregate neben den bereits vorhandenen Häckselaggregaten von Pflückvorsatzgeräten geringerer Arbeitsbreiten angeordnet. So sind beispielsweise Maispflückvorsätze für 12 und auch 16 Reihen bekannt. Dieses bedeutet, dass für jede Reihe ein separates Pflück und Häckselaggregat vorzusehen ist. Analog verhält es sich mit reihenunabhängigen Maispflückern, deren Anzahl von Pflück- und Häckselaggregaten bei gleicher Arbeitsbreite keineswegs geringer ausfällt.

Allen Pflück- und Häckselaggregaten gemeinsam ist, dass sie rotierende Arbeitswerkzeuge aufweisen, die letztendlich mit der Antriebswelle des Motors des Mähdreschers in Wirkverbindung stehen. Dabei sind erhebliche Antriebsdrehmomente über die entsprechenden Antriebsstränge an die jeweiligen Pflück- und Häckselaggregate zu übertragen. Mit zunehmenden Arbeitsbreiten nehmen auch die Beträge der Antriebsdrehmomente entsprechend zu. Bei den bisher bekannten Systemen zum Antrieb von Maispflückern ist die Situation so, dass bei breiter werdenden Geräten die Antriebswellen in den Getrieben zum Antrieb der Arbeitswerkzeuge dicker werden. Dadurch würde z.B. ein sechzehnreihiger Maispflücker so angetrieben, als würde man einen achtreihigen Maispflücker von einer Seite aus antreiben.

Diese großen Antriebsdrehmomente erfordern insbesondere dann, wenn die Getriebe zum Antrieb der Pflückaggregate in Reihe geschaltet sind, entsprechend stark dimensionierte Gehäuse einschließlich der dazugehörigen Antriebselemente. Das gleiche gilt auch für den zugehörigen Antriebsstrang. Dieses ist mit großen Gewichtskräften und entsprechend hohen Kosten verbunden. Hier nun setzt die Erfindung an, die sich zum Ziel gesetzt hat, ein Antriebskonzept zu schaffen, welches die Nachteile der entsprechend stark dimensionierten und damit schweren und kostenintensiven Getriebe mindert.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Durch eine antriebsseitige Aufspaltung des Antriebsstrangs einer Pflückerhälfte eines Pflückvorsatzes in mehrere Antriebsstränge, die jeweils nur eine Pflückergruppe antreiben, ist es möglich, die Getriebe der Pflückergruppe in Reihe zu schalten und dabei gleichzeitig die Maximalbelastung entsprechend abzusenken.

Beispielsweise kann ein zwölfreihiger Pflückvorsatz insgesamt in vier Pflückergruppen aufgeteilt werden, wobei jeweils drei Pflückaggregate innerhalb einer Pflückergruppe zusammengefasst sind. Dabei ist jeder Pflückergruppe ein separater Antriebsstrang zugeordnet. Dadurch bedingt wird das Pflückergetriebe zum Antrieb der umlaufenden Arbeitswerkzeuge maximal mit dem dreifachen Betrag des Antriebsdrehmomentes belastet, welches für den Betrieb eines einzelnen Pflückaggregates erforderlich ist. Oder anders ausgedrückt, eines der drei Pflückergetriebe wird lediglich die Antriebsdrehmomente seiner zwei Nachbargetriebe mit übertragen müssen. Dadurch bedingt können beispielsweise an einem sechsreihigen Pflücker die gleichen Getriebe verwand werden, wie bei einem sechsreihigen Pflückvorsatz bekannter Bauart.

In ähnlicher Weise kann beispielsweise auch ein sechzehnreihiger Pflückvorsatz in weitere Pflückergruppen aufgeteilt werden, beispielsweise in vier Gruppen zu je drei Pflückaggregaten mit zwei weiteren Pflückergruppen zu je zwei Pflückaggregaten, wobei auch den zwei weiteren Pflückergruppen ein separater Antriebsstrang zugeordnet ist.

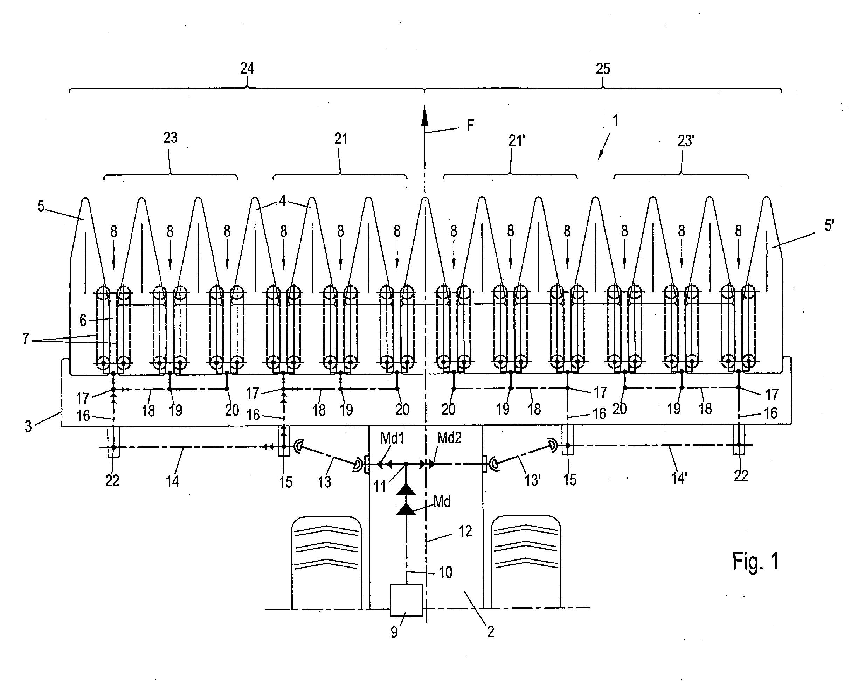

In **Fig. 1** ist das Antriebskonzept nach der Erfindung symbolisch näher dargestellt. Dargestellt ist die Draufsicht auf einen Mähdrescher 2 mit einem angebauten Pflückvorsatzgerät 1 in Fahrtrichtung F. Dieses zeigt den vorderen Teil eines Mähdreschers 2 als Trägerfahrzeug mit einem Pflückvorsatzgerät 1 als Pflückvorsatz zum Ernten von Mais. Ein Pflückvorsatzgerät 1 besteht prinzipiell aus einem Rahmengestell 3 mit inneren Abteilern 4, den äußeren Abteilern 5,5', den Pflückaggregaten 8 mit deren Pflückspalten 6.

Dabei kann es sich prinzipiell um Pflückvorsätze mit Pflückaggregaten 8 bekannter Bauart mit umlaufenden und/oder rotierenden Arbeitswerkzeugen 7 handeln. Stellvertretend für die Gesamtheit aller umlaufenden Arbeitswerkzeuge 7, die beispielsweise aus einer Kombination von Pflückwalzen, Einzugsketten, Mähscheiben und Horizontalhäckslern bestehen können, die an dem Pflückvorgang mitwirken, sind je Pflückspalt 9 je ein Paar umlaufender Einzugsketten dargestellt. Gemeinsam ist diesen umlaufenden Arbeitswerkzeugen 7, dass diese antriebsseitig zunächst über einen internen Antriebsstrang 10 des Mähdreschers 2, der ein Antriebsdrehmoment Md an das Pflückvorsatzgerät 1 überträgt, mit der Abtriebswelle des Motors 9 eines Mähdreschers 2 in Wirkverbindung stehen.

Intern, d.h. innerhalb der Grenzen des Mähdreschers, findet bereits eine erste Aufspaltung des Antriebsdrehmoments Md zum Antrieb der Pflückaggregate 8 innerhalb der Antriebsstrangverzweigung 11 des internen Antriebsstranges 10 statt. Dieses dient zum Antrieb der linken bzw. rechten Sektion 24,25 des Vorsatzgerätes 1 und erzeugt somit das linksseitige und rechtseitige Antriebsdrehmoment Md1 und Md2.

Im Grenzübergang des Mähdreschers 2 ist der interne Antriebsstrang 10 beidseitig der Längsmittelebene 12 des Mähdreschers 2 mit Gelenkwellen 13,13' verbunden, die ihrerseits mit den vorgelagerten Antriebssträngen 14,14' in Wirkverbindung stehen. Jeder der vorgelagerten Antriebsstränge 14,14' beinhaltet wenigstens eine Antriebsstrangverzweigung 15, von der ein weiterer Antriebsstrang 16 abzweigt, der zumindest eine Pflückergruppe 21,21' antreibt. In dem dargestellten Beispiel anhand der Fig.1 sind die vorgelagerten Antriebsstränge 14,14' weitergeführt bis zu einer zweiten Antriebsstrangverzweigung 22, von der ebenfalls ein weiterer Antriebsstrang 16 abzweigt, der je eine Pflückergruppe 23 bzw. 23' antreibt.

Den Pflückergruppen 21,21', 23,23' ist ein weiterer Gruppenantriebsstrang 18 vorgelagert und zugeordnet, wobei der Antriebstrang 16 in der Antriebsstrangverzweigung 17 an dem Gruppenantriebsstrang 18 mündet und angekoppelt ist. In einer weiteren Antriebsstrangverzweigung 19 findet eine weitere Aufspaltung des Gruppenantriebsstranges 18 statt, wobei jedem Gruppenantriebsstrang 18 nunmehr je drei Pflückaggregate 8 zugeordnet sind.

Der Gruppenantriebsstrang 18 ist zweckmäßigerweise als durchgehende Antriebswelle ausgebildet, wobei die Antriebsverzweigungen 17,19,20 beispielsweise als Kegelradgetriebe mit einer Hohlwelle ausgebildet sein können, die auf der durchgehenden Antriebswelle aufgefädelt sind und somit in einer Flucht liegen. Auch ist es ohne weiteres möglich, diese Antriebsverzweigungen 17,19,20 durch andere Formen von Antriebselementen zu ersetzen, beispielsweise durch in Reihe geschaltete Stirnradgetriebe oder Umschlingungsgetriebe, wie Rollenkettengetriebe oder Zahnriehmengetriebe oder ähnlichen Ausführungen.

Diesen Antriebsverzweigungen 17,19,20 können zweckmäßigerweise weitere Antriebsverzweigungen nachgeschaltet sein, die weiter verschiedene Arten von umlaufenden bzw. angetriebenen Werkzeugen 7 antreiben, und die gemeinsam ein Pflückaggregat 8 bilden. Diese können beispielsweise Pflückwalzen, Einzugsketten, Schneckeneinzugswalzen, Messerscheiben, Einzugsscheiben, Horizontalhäcksler usw. umfassen.

Der Antriebsstrang 14,14 kann vorzugsweise auch durch eine durchgehende Antriebswelle dargestellt sein, die gleichzeitig in den Antriebsverzweigungen 15 und 22 in Aufsteckgetrieben mit Hohlwelle abgestützt und gelagert ist. Diese Aufsteckgetriebe sind zweckmäßigerweise dann an dem Rahmengestell 3 abgestützt. Die abgehenden Antriebsstränge 16 können vorteilhaft durch Gelenkwellen realisiert sein. Aber auch hier sind durchaus andere Ausführungsformen von Antriebssträngen 16, beispielsweise in Form von Umschlingungsgetrieben realisierbar.

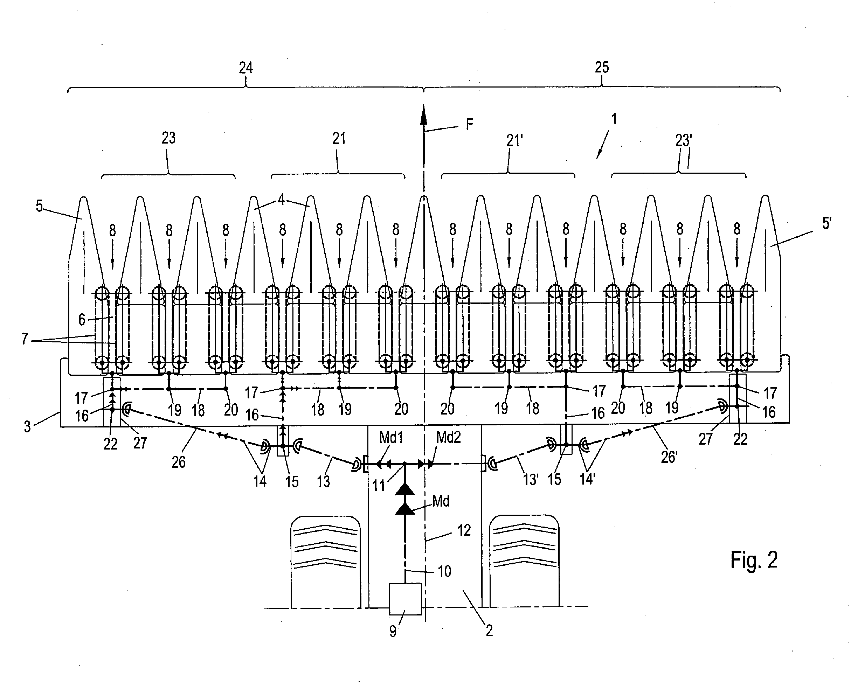

**Fig. 2** stellt eine Ausführungsvariante zu der Ausgestaltung des Antriebs gemäß Fig. 1 dar. Hier ist der Antriebsstrang 14,14' nicht als durchgehender gerader Antriebstrang, beispielsweise in Form einer durchgehenden Welle bis zur Antriebsstrangverzeigung 22 dargestellt, sondern vielmehr als abgewinkelter Antriebsstrang, der als Gelenkwelle 26,26' ausgebildet sein kann. Dadurch können beispielsweise die Antriebsverzweigung 17 und 22 in einem gemeinsamen und kompakten Antriebselement in Form eines geschlossenen Getriebes 27 zusammengelegt und integriert werden.

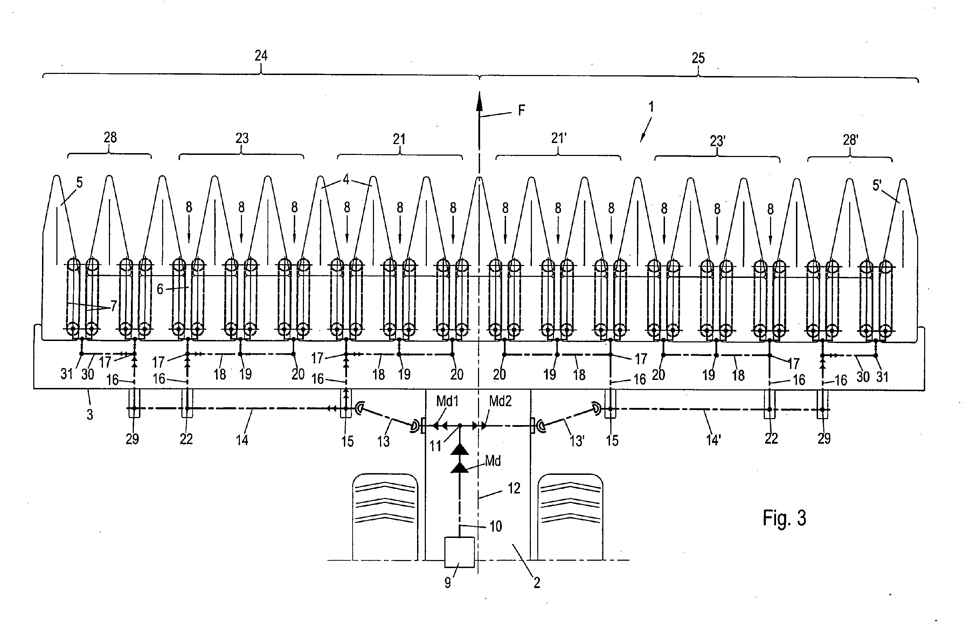

In **Fig. 3** ist ein sechzehnreihiger Maispflücker als Pflückvorsatzgerät 1 analog dem Antriebskonzept gemäß Fig. 1 dagestellt. Dieses ist um zwei weitere Pflückergruppen 28,28' gegenüber dem zwölfreihigen Maispflücker gemäß Fig. 1 erweitert. Antriebsseitig sind dazu die Antriebsstränge 14,14' dahingehend erweitert, dass diese in ihrer Quererstreckung jeweils nach außen hin verlängert sind und dabei die Antriebsverzweigung 29 durchstrecken. Diese kann analog Antriebsverzweigung 22 ausgebildet sein, so dass auch von der Antriebsverzweigung 29 nunmehr ein Antriebsstrang 16 abgeht und dieser an dem Gruppenantriebsstrang 30 in der Antriebsverzweigung 17 angekoppelt ist.

Von den Antriebsverzweigungen 17 und 31 ausgehend werden nun die beiden Pflückaggregate 8 der jeweiligen Pflückergruppe 28,28' angetrieben.

Die in den einzelnen Antriebssträngen dargestellten Doppelpfeile stellen symbolhaft die Kraftflussrichtung des jeweiligen nicht näher gekennzeichneten Antriebsdrehmoments dar.

### Bezugszeichenliste

- 1: Pflückvorsatzgerät
- 2: Mähdrescher
- 3: Rahmengestell
- 4: inneren Abteiler
- 5,5': äußeren Abteiler
- 6: Pflückspalt
- 7: Umlaufende Werkzeuge
- 8: Pflückaggregat
- 9: Motor
- 10: interner Abtriebsstrang
- 11: Antriebsstrangverzweigung
- 12: Längsmittelebene
- 13,13': Gelenkwelle
- 14,14': vorgelagerter Antriebsstrang
- 15: Antriebsstrangverzweigung
- 16: Antriebsstrang
- 17: Antriebsstrangverzweigung
- 18: Gruppenantriebsstrang
- 19: Antriebsstrangverzweigung
- 20: Antriebsstrangverzweigung
- 21,21': Pflückergruppe
- 22: Antriebsstrangverzweigung
- 23,23': Pflückergruppe
- 24: linke Sektion
- 25: rechte Sektion
- 26,26': Gelenkwelle
- 27: geschlossenes Getriebe
- 28,28': Pflückergruppe
- 29: Antriebsstrangverzweigung
- 30: Gruppenantriebsstrang
- 31: Antriebsstrangverzweigung

- F: Fahrtrichtung
- Md: Antriebsdrehmoment
- Md1: Antriebsdrehmoment
- Md2: Antriebsdrehmoment

## Patentansprüche

1. Pflückvorsatzgerät (1) zum Ernten von Fruchtständen für Mähdrescher (2) für Mähdrescher (2), wie beispielsweise Maiskolben, bestehend aus mehreren in einem Rahmengestell (3) nebeneinander angeordneten Pflückaggregaten (8), die mit umlaufend angetriebenen Werkzeugen (7) ausgestattet sind, die über Antriebsstränge mit der Motorwelle des Motors (9) eines Mähdreschers (2) antriebsseitig in Wirkverbindung stehen, **dadurch gekennzeichnet, dass** das Pflückvorsatzgerät (1) wenigstens vier Pflückergruppen (21,21',23,23') mit Pflückaggregaten (8) mit umlaufend angetriebenen Werkzeugen (7) aufweist, wobei wenigstens zwei Pflückergruppen (21,23) bzw. (21',23') etwa beidseits der Längsmittelebenen (12) angeordnet sind, und die wenigsten zwei Pflückergruppen (21,23) bzw. (21',23') über einen vorgelagerten Antriebsstrang (14 bzw. 14') derart angetrieben sind, dass jeder Pflückergruppe (21,23) bzw. (21'23') eine Antriebsverzweigung (15 oder 22) zugeordnet ist, die ihrerseits Teile des vorgelagerten Antriebsstrang (14,14') sind, und wobei die abgehenden Antriebsstränge (16) der Antriebsverzweigungen (15) antriebsseitig in einer weiteren Antriebsverzweigung (17) der jeweiligen Pflückergruppe (21,21',23,23') münden und mit dem einer Pflückergruppe (21,21',(23,23') zugeordneten Gruppenantriebsstrang (16) in Wirkverbindung stehen, und wobei eine Pflückergruppe (21,21',23,23') wenigstens zwei Pflückaggregate (8) umfasst.

2. Vorsatzgerät (1) für Mähdrescher (2) nach Anspruch 1, **dadurch gekennzeichnet, dass** der Gruppenantriebsstrang (16) wenigstens eine weitere Antriebsverzweigung (19 oder (20) aufweist.

3. Vorsatzgerät (1) für Mähdrescher (2) nach Anspruch 1, **dadurch gekennzeichnet, dass** die wenigsten zwei Antriebsverzweigungen (17 und 19) oder (17 und 20) des Gruppenantriebsstranges (16) auf einer gemeinsamen Antriebswelle fluchten.

4. Pflückvorsatzgerät (1) für Mähdrescher (2) nach Anspruch 1 in Verbindung mit einem oder mehreren der vorhergehenden Ansprüche, **dadurch gekennzeichnet, dass** ein Teil der umlaufenden Arbeitswerkzeuge (7) eines Pflückaggregats (8) aus Einzugs- oder Förderelementen, wie Pflück- und/oder Einzugswalzen und/oder umlaufenden Förderketten, und/oder Mäh- oder Häckselmessern oder einer Kombination derartiger umlaufenden Arbeitswerkzeuge (7) bestehen kann.

5. Pflückvorsatzgerät (1) für Mähdrescher (2) nach Anspruch 1 in Verbindung mit einem oder mehreren der vorhergehenden Ansprüche, **dadurch gekennzeichnet, dass** eine Antriebsverzweigung (15,17) aus einem Winkelgetriebe bestehen kann.

6. Pflückvorsatzgerät (1) für Mähdrescher (2) nach Anspruch 1 in Verbindung mit einem oder mehreren der vorhergehenden Ansprüche, **dadurch gekennzeichnet, dass** eine Antriebsverzweigung (15,17) aus einem Stirnradgetriebe bestehen kann.

7. Pflückvorsatzgerät (1) für Mähdrescher (2) nach Anspruch 1 in Verbindung mit einem oder mehreren der vorhergehenden Ansprüche, **dadurch gekennzeichnet, dass** eine Antriebsverzweigung (15) oder (17) aus einem Winkel- oder Stirnradgetriebe mit einer Hohlwelle bestehen kann.

8. Pflückvorsatzgerät (1) für Mähdrescher (2) nach Anspruch 1 in Verbindung mit einem oder mehreren der vorhergehenden Ansprüche, **dadurch gekennzeichnet, dass** der Antriebsstrang 16 aus einer Wellenverbindung bestehen kann.

9. Pflückvorsatzgerät (1) für Mähdrescher (2) nach Anspruch 1 in Verbindung mit einem oder mehreren der vorhergehenden Ansprüche, **dadurch gekennzeichnet, dass** der Antriebsstrang 16 aus einem Umschlingungstrieb bestehen kann.

10. Pflückvorsatzgerät (1) für Mähdrescher (2) nach Anspruch 1 in Verbindung mit einem oder mehreren der vorhergehenden Ansprüche, **dadurch gekennzeichnet, dass** der Antriebsstrang 16 als Wellenverbindung aus einer Gelenkwelle bestehen kann.

11. Pflückvorsatzgerät (1) für Mähdrescher (2) nach Anspruch 1 in Verbindung mit einem oder mehreren der vorhergehenden Ansprüche, **dadurch gekennzeichnet, dass** der Antriebsstrang 16 als Umschlingungstrieb aus einer Gliederkette, und insbesondere aus einer Zylinderrollenkette bestehen kann.

12. Pflückvorsatzgerät (1) für Mähdrescher (2) nach Anspruch 1 in Verbindung mit einem oder mehreren der vorhergehenden Ansprüche, **dadurch gekennzeichnet, dass** der durchgehende Antriebsstrang endseitig wenigstens drei Pflückaggregate mit dessen umlaufenden Arbeitswerkzeugen antreibt.

13. Pflückvorsatzgerät (1) für Mähdrescher (2) nach Anspruch 1 in Verbindung mit einem oder mehreren der vorhergehenden Ansprüche, **dadurch gekennzeichnet, dass** eine Antriebsverzweigung (15 oder 22) in Verbindung mit der Antriebsverzweigung (17) und dem Antriebsstrang (16) in einem diesen Antriebselementen gemeinsamen Gehäuse als Einheit integriert sind.
